# EUROPÄISCHE PATENTSCHRIFT

(11) **EP 1 338 191 B1**
(45) Veröffentlichungstag und Bekanntmachung des Hinweises auf die Patenterteilung: **14.03.2007**
(21) Anmeldenummer: 03100223.1
(22) Anmeldetag: 04.02.2003
(51) Int. Cl.: A01F 29/14

(54) **Antriebssystem einer Gutbearbeitungseinrichtung und einer Gutfördereinrichtung einer Erntemaschine**
Drive system for a crop treatment and transport device in a harvesting machine
Système d'entraînement d'un dispositif de traitement et de transport de récolte dans une moissonneuse

(30) Priorität: 22.02.2002 DE 10207467
(43) Veröffentlichungstag der Anmeldung: 27.08.2003
(73) Patentinhaber: DEERE & COMPANY, Moline, Illinois 61265-8098 (US)
(72) Erfinder: Kempf, Bernd, 66484, Althornbach (DE)
(74) Vertreter: Holst, Sönke

(56) Entgegenhaltungen:
- EP-A- 0 680 687
- EP-A- 1 180 322
- WO-A-01/65919
- GB-A- 2 169 366
- US-A- 4 009 556
- US-A- 6 052 978

## Beschreibung

Die Erfindung betrifft ein Antriebssystem einer Gutbearbeitungseinrichtung und einer Gutfördereinrichtung einer Erntemaschine, das mindestens in einer ersten Betriebsart und in einer zweiten Betriebsart betreibbar ist, wobei in der ersten Betriebsart die Gutbearbeitungseinrichtung durch eine erste Antriebseinrichtung angetrieben wird und zumindest ein Teil der Antriebsleistung der Gutfördereinrichtung durch eine zweite Antriebseinrichtung bereitgestellt wird, so dass die Gutfördereinrichtung der Gutbearbeitungseinrichtung Erntegut zuführt, und die Gutbearbeitungseinrichtung in der zweiten Betriebsart durch die zweite Antriebseinrichtung angetrieben wird.

Die WO 99/48353 A beschreibt ein Antriebssystem für die Einzugswalzen und die Häckseltrommel eines Feldhäckslers. Beim Erntebetrieb wird die Häckseltrommel mechanisch angetrieben. Der mechanische Antrieb ist auch mit dem Sonnenrad eines Planetengetriebes verbunden. Das Ringrad des Planetengetriebes wird durch einen Hydromotor angetrieben und die Planetenradträger sind mit den Einzugswalzen verbunden. Dadurch kann die Drehzahl der Einzugswalzen und die damit zusammenhängende Schnittlänge stufenlos durch Variation der Drehzahl des Hydromotors verstellt werden. Das Planetengetriebe kann in sich blockiert werden, um nur das Moment des Hydromotors zu den Einzugswalzen oder zur Häckseltrommel durchzuleiten. Dadurch kann die Häckseltrommel rückwärts oder vorwärts geschliffen werden. Das bekannte Antriebssystem hat aber den Nachteil, dass die Einzugswalzen permanent durch den Hydromotor angetrieben werden, also auch beim Schleifen.

Bei anderen, konventionellen Feldhäckslern wird ein schaltbares Getriebe für den Antrieb der Einzugswalzen und der angetriebenen Elemente der Erntegutaufnahmeeinrichtung verwendet. Dieses Getriebe wird vor dem Schleifen manuell in eine Leerlaufstellung verbracht, was einen hohen Aufwand verursacht, da der Fahrer aus seiner Kabine heraussteigen und sich zum Getriebe begeben muss, das in der Nähe des Einzugskanals angeordnet ist.

Das der Erfindung zugrunde liegende Problem wird darin gesehen, ein verbessertes Antriebssystem bereitzustellen, bei dem die oben genannten Nachteile nicht vorliegen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung bezieht sich auf ein Antriebssystem einer Gutbearbeitungseinrichtung und einer Gutfördereinrichtung einer Erntemaschine, das wenigstens in einer ersten und einer zweiten Betriebsart betreibbar ist. In der ersten Betriebsart treibt eine erste Antriebseinrichtung, in der Regel ein Verbrennungsmotor, die Gutbearbeitungseinrichtung direkt oder indirekt, d. h. über dazwischen geschaltete mechanische Getriebe oder andere Kraftübertragungseinrichtungen, wie Hydrogetriebe, an. Wenigstens ein Teil der Antriebsleistung der der Gutbearbeitungseinrichtung Erntegut zuführenden Gutfördereinrichtung wird in der ersten Betriebsart durch eine zweite Antriebseinrichtung bereitgestellt. In der zweiten Betriebsart, die beispielsweise zum Schleifen der Gutbearbeitungseinrichtung mit geänderter Drehzahl bzw. Drehrichtung dient, treibt die zweite Antriebseinrichtung die Gutbearbeitungseinrichtung an. Um eine Drehung der Gutfördereinrichtung in der zweiten Betriebsart zu verhindern, schlägt die Erfindung vor, dass eine Arretierungseinrichtung in der zweiten Betriebsart eine Drehung der Gutfördereinrichtung unterbindet.

Auf diese Weise dient die zweite Antriebseinrichtung für zwei Aufgaben, nämlich in der ersten Betriebsart zum Antrieb der Gutfördereinrichtung und in der zweiten Betriebsart zum Antrieb der Gutbearbeitungseinrichtung, man vermeidet aber eine unerwünschte Drehung der Gutfördereinrichtung in der zweiten Betriebsart.

Die zweite Antriebseinrichtung umfasst vorzugsweise einen separaten Motor. Vorzugsweise findet ein Hydromotor Verwendung, obwohl auch ein Elektromotor einsetzbar ist. Eine Ausführungsform eines Motors mit veränderlicher Ausgangsdrehzahl ermöglicht eine Einstellung der Fördergeschwindigkeit der Fördereinrichtung, die bei einem Feldhäcksler die erzielte Schnittlänge beeinflusst.

Grundsätzlich wäre zwar denkbar, dass der Motor der zweiten Antriebseinrichtung die gesamte Antriebsleistung für die Fördereinrichtung bereitstellt. Um einen leistungsschwächeren und somit kleineren und preiswerteren Motor verwenden zu können, ist jedoch bevorzugt, die Antriebsleistung der Fördereinrichtung zumindest teilweise auch von der ersten Antriebseinrichtung bereitstellen zu lassen. Dabei kann ein Planetengetriebe oder ein anderes Überlagerungsgetriebe Verwendung finden, das mit dem Motor und (in der ersten Betriebsart) mit der ersten Antriebseinrichtung gekoppelt ist. Mit dem Planetengetriebe ist in der ersten Betriebsart die Geschwindigkeit der Gutfördereinrichtung durch Variation der Drehzahl des Motors einstellbar. Bei einer derartigen Ausführungsform ist es sinnvoll, das Planetengetriebe in der zweiten Betriebsart beispielsweise durch Herstellung einer starren Verbindung zwischen Sonnenrad und Planetenradträger in sich zu blockieren, um die Antriebskraft des Motors zur Gutbearbeitungseinrichtung durchzuleiten, welche ihrerseits von der ersten Antriebseinrichtung getrennt wird. Es kann aber in der zweiten Betriebsart auch ein separater Antriebsstrang zwischen dem Motor und der Gutbearbeitungseinrichtung genutzt werden.

Es bietet sich an, die Gutfördereinrichtung in der zweiten Betriebsart nicht nur zu arretieren, sondern auch antriebsmäßig von der zweiten Antriebseinrichtung zu trennen. Die Arretierungseinrichtung kann, wie es bei Abschaltkupplungen von Metalldetektoren an sich bekannt ist, zuerst den Antrieb abtrennen und zeitlich kurz danach die Gutfördereinrichtung arretieren. In einer bevorzugten Ausführungsform findet eine Schaltkupplung Verwendung, die in der ersten Betriebsart durch ein erstes Element aktivierbar ist, welches von einem Metalldetektor gesteuert wird. Weiterhin ist ein zweites Element vorgesehen, das in der zweiten Betriebsart die Schaltkupplung aktiviert. Das erste und/oder zweite Element dient vorzugsweise auch zum Arretieren der Fördereinrichtung. Dazu können konventionelle Sperrklinken Verwendung finden, die in sägezahnförmig verzahnte Sperrräder eingreifen, die auf einer die Fördereinrichtung antreibenden Welle angeordnet sind.

In der zweiten Betriebsart können auch die angetriebenen Elemente einer Erntegutaufnahmeeinrichtung dadurch angehalten werden, dass ein ihnen zugeordnetes Schaltgetriebe in die Leerlaufstellung verbracht wird.

Anzumerken ist, dass die Arretierungseinrichtung und die übrigen erwähnten, steuerbaren Elemente in der Regel nicht einzeln durch den Bediener der Erntemaschine manuell durch Schalter in ihre den jeweiligen Betriebsarten zugeordneten Positionen verbracht werden, sondern elektronisch bzw. elektromechanisch durch eine Steuerung gesteuert werden, die ihrerseits mit einer vorzugsweise in einer Kabine angeordneten Eingabeeinrichtung verbunden ist. Der Bediener wählt in der Eingabeeinrichtung die erste, zweite oder eine beliebige weitere Betriebsart aus und die Steuerung veranlasst die beschriebene Aktivierung der steuerbaren Elemente.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: ein Schema des Antriebssystems der Gutförder- und Gutbearbeitungselemente der Erntemaschine, und
- Fig. 3: ein Schema des verstellbaren Getriebes des Antriebssystems.

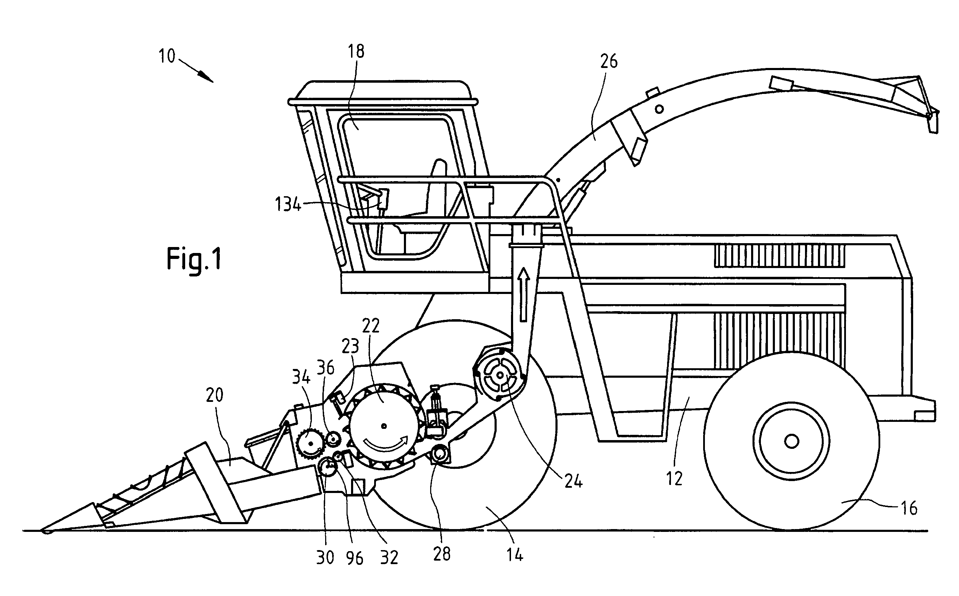

Eine in Figur 1 gezeigte Erntemaschine 10 in Form eines selbstfahrenden Feldhäckslers baut sich auf einem Rahmen 12 auf, der von vorderen und lenkbaren rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird durch in einem Einzugskanal der Erntemaschine 10 angeordnete untere Einzugswalzen 30, 32 und obere Einzugswalzen 34, 36 einer als Gutbearbeitungseinrichtung vorgesehenen Häckseltrommel 22 zugeführt, die es in kleine Stücke häckselt und es einer Fördervorrichtung 24 aufgibt. Die Einzugswalzen 30 - 36 dienen als Gutfördereinrichtung. In der Regel sind die oberen Einzugswalzen 34, 36 relativ zu den unteren Einzugswalzen 30, 32 bewegbar angeordnet und werden durch Federkraft gegen letztere gepresst. Das Gut verlässt die Erntemaschine 10 zu einem nebenher fahrenden Anhänger über einen drehbaren Austragsschacht 26. Zwischen der Häckseltrommel 22 und der Fördervorrichtung 24 ist eine aus zwei übereinander angeordneten Prozessorwalzen aufgebaute Nachzerkleinerungsvorrichtung 28 angeordnet, durch die das zu fördernde Gut der Fördervorrichtung 24 tangential zugeführt wird. Der Häckseltrommel 22 ist eine Schleifeinrichtung 23 mit einem Schleifstein zugeordnet, mit dem die Messer der Häckseltrommel 22 geschärft werden können.

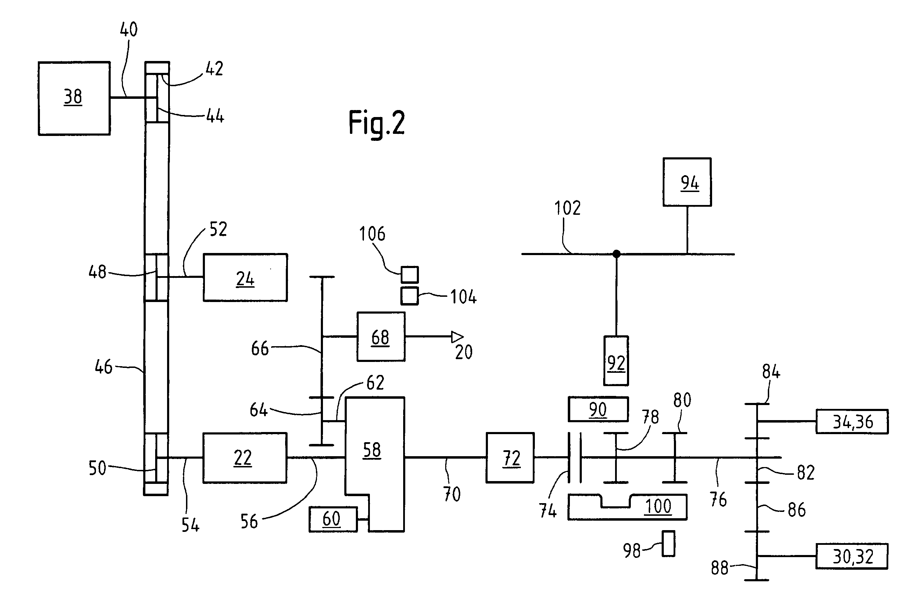

In der Figur 2 sind die Elemente des Antriebssystems der Gutbearbeitungs- und Gutförderungselemente im Einzelnen dargestellt. Ein in der Regel mit konstanter Drehzahl laufender, oberhalb der hinteren Räder 16 an Rahmen 12 befestigter Verbrennungsmotor 38 dient als erste Antriebseinrichtung und stellt ein Antriebsdrehmoment bereit. Über eine (nicht eingezeichnete) Hydraulikpumpe sind den Rädern 14, 16 zugeordnete Hydraulikmotoren antreibbar, um die Erntemaschine 10 in Vorwärtsrichtung über ein Feld oder eine Straße bewegen zu können.

Die Ausgangswelle 40 des Verbrennungsmotors 38 treibt über eine ein- und ausschaltbare Elektrokupplung 44 eine erste Riemenscheibe 42 an. Die Elektrokupplung 44 ist im Innenraum der ersten Riemenscheibe 42 angeordnet. Die erste Riemenscheibe 42 steht mit einem Treibriemen 46 im Eingriff, der weiterhin mit einer zweiten Riemenscheibe 48 und einer dritten Riemenscheibe 50 im Eingriff steht. Dem Treibriemen 46 sind in der Regel Spanneinrichtungen zugeordnet. Anstelle der Elektrokupplung 44 könnte auch eine ein- und ausschaltbare Riemenspanneinrichtung Verwendung finden, um die Antriebsverbindung zwischen dem Treibriemen 46 und dem Verbrennungsmotor 38 herzustellen bzw. zu lösen. Die zweite Riemenscheibe 48 ist über eine Welle 52 mit dem Rotor der Fördervorrichtung 24 gekoppelt. Die dritte Riemenscheibe 50 ist über eine andere Welle 54 mit der Häckseltrommel 22 gekoppelt.

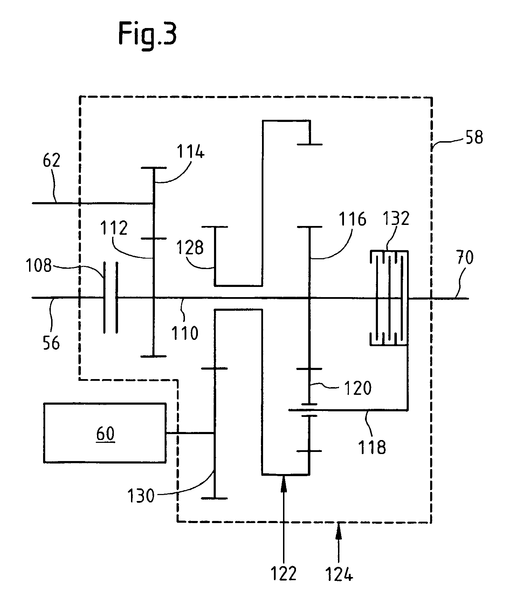

An der der Welle 54 gegenüberliegenden Seite der Häckseltrommel 22 ist letztere drehmomentfest mit einer weiteren Welle 56 verbunden, die mit einem verstellbaren Getriebe 58 gekoppelt ist. Das Getriebe 58 wird in Figur 3 detaillierter dargestellt und wird weiter unten näher beschrieben. Das Getriebe 58 ist weiterhin mit einem Hydromotor 60, einer Abtriebswelle 62, mit der über Zahnräder 64, 66 und ein Schaltgetriebe 68 die angetriebenen Elemente der Erntegutaufnahmevorrichtung 20 in Verbindung stehen, sowie einer Ausgangswelle 70 verbunden. Der Hydromotor 60 dient als zweite Antriebseinrichtung für die Einzugswalzen 30 - 36 und die Häckseltrommel 22. Die vom Getriebe 58 angetriebene Ausgangswelle 70 steht über ein Übersetzungsgetriebe 72 mit einer als Rutschkupplung ausgeführten Schaltkupplung 74 in Verbindung, die abtriebsseitig mit einer Welle 76 gekoppelt ist, auf der drehmomentfest und axial zueinander versetzt ein erstes Sperrrad 78 mit radial gestellten Wirkflächen und ein zweites verzahntes Sperrrad 80 mit radial gestellten Wirkflächen angeordnet sind, das gegenüber dem ersten Sperrrad 78 um 180° versetzt ist. Die Welle 76 steht außerdem über Zahnräder 82, 84, 86 und 88 mit den oberen Einzugswalzen 34 und 36 und den unteren, sich gegensinnig zu letzteren drehenden Einzugswalzen 30 und 32 in Antriebsverbindung.

Der Schaltkupplung 74 und dem ersten Sperrrad 78 ist ein elektromagnetisch bewegbarer Sperrnocken 90 zugeordnet. In seiner aktivierten Stellung bewirkt der Sperrnocken 90, dass zuerst die Schaltkupplung 74 geöffnet wird und zeitlich kurz danach der Sperrnocken 90 in das Sperrrad 78 eingreift, um es zu arretieren. Dabei kann eine Steuerfläche der Schaltkupplung 74 durch eine schräg zur Drehrichtung angeordnete Fläche des Sperrnockens 90 gegen die Kraft einer Feder bewegt werden, was dazu führt, dass zwei Reibflächen der Schaltkupplung 74, von denen eine mit dem Übersetzungsgetriebe 72 und eine mit der Welle 76 antriebsverbunden ist, axial auseinander bewegt werden und außer Eingriff gelangen. Anschließend gelangt eine entsprechende Fläche des Sperrnockens 90 mit der Wirkfläche des Sperrrads 76 in Eingriff und arretiert es. Vorzugsweise findet für den Sperrnocken 90, die Schaltkupplung 70 und das Sperrrad 78 eine Ausführungsform Verwendung, wie sie aus der DE 33 44 043 C, der DE 35 32 000 C oder der DE 36 01 355 C bekannt geworden ist, deren Offenbarung durch Verweis mit in das vorliegende Schutzrecht aufgenommen wird. Als Schaltkupplung kann auch eine beliebige andere Ausführungsform zur Verwendung kommen, beispielsweise eine schaltbare Klauenkupplung, wie sie in der DE 198 04 071 A, der DE 298 24 502 U oder der DE 198 39 154 C offenbart ist. Der Sperrnocken 90 ist durch einen Elektromagneten 92 zwischen seiner aktivierten Stellung und seiner Ruhestellung bewegbar. Der Elektromagnet 92 ist über einen Bus 102 mit einer Steuerung 94 verbunden, die weiterhin mit der Elektrokupplung 44 und einem Metalldetektor 96 in Verbindung steht, welcher in der vorderen unteren Einzugswalze 30 angeordnet und zum Nachweis ferromagnetischer Materialien im eingezogenen Gutstrom eingerichtet ist. Ein derartiger Metalldetektor 96 ist beispielsweise aus der EP 0 324 253 A, der DE 199 12 407 A, der DE 2 552 805 A und den dort genannten Referenzen bekannt geworden. Der Sperrnocken 90 und das erste Sperrrad 78 sind eingerichtet, die Drehung der Welle 76 zu unterbrechen, wenn letztere sich in eine erste Richtung dreht, die dem normalen Häckselbetrieb entspricht.

Dem zweiten verzahnten Sperrrad 80 ist ein zweiter Sperrnocken 100 zugeordnet, der durch einen Elektromagneten 98 zwischen seiner Ruhestellung und seiner aktivierten Stellung bewegbar ist, in der er zuerst die Schaltkupplung 74 öffnet und danach in das zweite verzahnte Sperrrad 80 eingreift und es arretiert. Der zweite Sperrnocken 100 ist gegenüber dem ersten Sperrnocken 90 winkelversetzt angeordnet. Er ist derart geformt, dass er nicht mit dem ersten Sperrrad 78 zusammenwirkt. Dazu kann eine entsprechende Aussparung im zweiten Sperrnocken 100 vorgesehen sein. Der Elektromagnet 98 ist ebenfalls über den Bus 102 mit der Steuerung 94 verbunden. Der zweite Sperrnocken 100 und das zweite Sperrrad 80 sind eingerichtet, eine Drehung der Welle 76 zu unterbinden, wenn letztere sich in eine zweite, der ersten Richtung entgegengesetzte Richtung dreht. Sein Aufbau und seine Wirkungsweise stimmt im Wesentlichen mit der des ersten Sperrnocken 90 überein, nur ist er bei einer gegenüber der Drehrichtung, in der der erste Sperrnocken 90 betreibbar ist, gegensinnigen Drehrichtung der Welle 76 betreibbar.

Das zum Antrieb der Erntegutaufnahmevorrichtung 20 dienende Schaltgetriebe 68 kann durch einen Hydraulikzylinder 104 in jeweils eine von drei Stellungen geschaltet werden: eine erste Stellung, in der zwischen Ein- und Ausgang des Schaltgetriebes 68 ein erstes Übersetzungsverhältnis wirksam ist, eine zweite Stellung, in der ein zweites Übersetzungsverhältnis wirksam ist, und eine dritte (Leerlauf-) Stellung, in der kein Abtriebsmoment bereitgestellt wird. Der Hydraulikzylinder 104 wird durch eine elektromagnetische Ventileinrichtung 106 gesteuert, die ihrerseits über den Bus 102 mit der elektronischen Steuerung 94 in Verbindung steht. Das Schaltgetriebe 68 ermöglicht somit, die angetriebenen Elemente der Erntegutbergungseinrichtung 20 wahlweise mit einer ersten oder einer zweiten Geschwindigkeit anzutreiben, oder sie abzuschalten.

Das verstellbare Getriebe ist in der Figur 3 detaillierter dargestellt. Die mit der Häckseltrommel 22 verbundene, weitere Welle 56 ist mit einer abschaltbaren Kupplung 108 verbunden. Ausgangsseitig ist die Kupplung 108 mit einer Welle 110 verbunden, die über ein kämmendes Zahnradpaar 112, 114 die mit der Erntegutaufnahmevorrichtung 20 gekoppelte Abtriebswelle 62 antreibt. Das von der Häckseltrommel 22 bereitgestellte Antriebsmoment wird somit mit einer festen Übersetzung durch das Getriebe 58 zum Schaltgetriebe 68 durchgeleitet. In einer anderen Ausführungsform könnte die Welle 62 aber auch mit der Ausgangswelle 70 gekoppelt sein, um eine stufenlose Verstellung der Arbeitsgeschwindigkeit der angetriebenen Elemente der Erntegutaufnahmevorrichtung 20 zu ermöglichen.

Der zur Ausgangswelle 70 führende Teil des verstellbaren Getriebes 58 ist als Planetengetriebe mit einem Sonnenrad 116, einem Planetenradträger 118 mit Planetenrädern 120, einem Ringrad 122 und einem Gehäuse 124 ausgeführt. Das Sonnenrad 116 steht in drehfester Verbindung mit der Welle 110, die auf nicht gezeigte Weise, wie auch das Ringrad 122 und der Planetenradträger 118 in dem Gehäuse 124 drehbar gelagert ist. Die Welle 110 erstreckt sich durch einen zentralen Bereich des glockenförmig gebildeten Ringrads 122. Der Hydromotor 60 wird durch eine vom Verbrennungsmotor 38 direkt oder indirekt angetriebene Hydraulikpumpe angetrieben und seine Drehzahl ist variierbar. Die Drehzahleinstellung kann auf verschiedene herkömmliche Arten durch Fördermengenreduzierung bzw. -erhöhung erfolgen. Es kann anstelle des Hydromotors 60 auch ein Elektromotor verwendet werden.

Der Planetenradträger 118 wird einerseits von den Planetenrädern 120 in Drehung versetzt und ist andererseits mit der Ausgangswelle 70 verbunden. Die Planetenräder 120 rollen zwischen dem Sonnenrad 116 und dem Ringrad 122 auf dem Planetenradträger 118 ab, wobei sich die Drehrichtung und die Geschwindigkeit nach dem Verhältnis der Drehzahlen des Sonnenrads 116 und des Ringrads 122 zueinander richten. In dem bevorzugten Ausführungsbeispiel sind drei Planetenräder 120 vorgesehen, wobei diese Zahl jedoch über- oder unterschritten werden kann. Das Ringrad 122 nimmt in seinem Innern die Planetenräder 120, den Planetenradträger 118 und das Sonnenrad 116 auf und ist in seinem geschlossenen Bereich mit einem Zahnrad 128 versehen und mit diesem drehfest verbunden. Dieses Zahnrad 128 kämmt mit einem Zahnrad 130, das von dem Hydromotor 60 angetrieben wird, bzw. sich auf dessen Ausgangswelle befindet. Das verstellbare Getriebe 58 enthält eine weitere Kupplung 132, die sich in drehfester Verbindung mit dem Planetenradträger 118 und somit auch ausgangsseitig mit der Ausgangswelle 70 befindet. Diese Kupplung 132 kann andererseits eine Verbindung mit der Welle 110 und dem Sonnenrad 116 herstellen. Auf diese Weise kann das gesamte Getriebe 58 in sich blockiert werden. Die weitere Kupplung 132 ist elektromagnetisch durch die Steuerung 94 betätigbar.

In einer anderen Ausführungsform ist das verstellbare Getriebe 58 auch als Planetengetriebe ausgeführt, jedoch steht die Welle 110 mit dem Ringrad 122 in Verbindung und das Zahnrad 130 des Hydromotors 60 treibt das Sonnenrad 116 an. In anderen Betriebsarten (z. B. Reversieren und Messerschleifen), in denen allein der Hydromotor 60 die Antriebsleistung für die Gutfördereinrichtung bereitstellt, wird das Ringrad 122 festgehalten. Der Vorteil liegt darin, dass dadurch die Übersetzung des Planetengetriebes genutzt wird. Die Antriebsleistung vom Hydromotor 60 kann dann ggf. über andere Antriebselemente auf die Gutbearbeitungseinrichtung übertragen werden.

Das beschriebene und zeichnerisch dargestellte Antriebssystem ermöglicht einen Betrieb in verschiedenen Betriebsarten, die mittels in der Kabine 18 im Bereich des Fahrers angeordnete, an der Oberseite eines Fahrhebels angebrachte, mit der Steuerung 94 verbundene Eingabeeinrichtungen 134 auswählbar sind. Im Konkreten handelt es sich dabei insbesondere um eine erste Betriebsart, in der ein Erntebetrieb erfolgt, eine zweite Betriebsart, in der die Messer der Häckseltrommel 22 geschliffen werden, und eine dritte Betriebsart, in der ein Reversierbetrieb erfolgt. Weitere Betriebsarten, wie Straßenfahrt und Leerlauf, sind selbstverständlich möglich.

In der ersten Betriebsart, bei der durch die Erntegutaufnahmevorrichtung 20 Pflanzen von einem Feld aufgenommen, durch die Häckseltrommel 22 gehäckselt und durch den Austragschacht 26 ausgestoßen werden können, läuft der Verbrennungsmotor 38 und die Elektrokupplung 44 ist durch die mit den Eingabeeinrichtungen 134 entsprechend angesteuerte Steuerung 94 in den eingekuppelten Zustand verbracht. Der Verbrennungsmotor 38 versetzt über den Treibriemen 46 die Fördervorrichtung 24 und die Häckseltrommel 22 in Drehung. Die Häckseltrommel 22 treibt über die weitere Welle 56 und die Kupplung 108, die in der ersten Betriebsart eingeschaltet ist, die Welle 110 im verstellbaren Getriebe 58 an. Die Welle 110 treibt über das kämmende Zahnradpaar 112, 114, die Zahnräder 64, 66 und das Schaltgetriebe 68 die angetriebenen Elemente der Erntegutaufnahmevorrichtung 20 an. Die Geschwindigkeit der Erntegutaufnahmevorrichtung 20 kann durch eine Eingabe in die Eingabeeinrichtung 134 mittels der Steuerung 94, die elektromagnetische Ventileinrichtung 106, den Hydraulikzylinder 104 und das Schaltgetriebe 68 in zwei Stufen gewählt werden.

Die Welle 110 treibt weiterhin das Sonnenrad 116 an. Der Hydromotor 60 mit mittels der Eingabeeinrichtung 134 variierbarer Drehzahl treibt über die kämmenden Zahnräder 128, 130 das Ringrad 122 an. Die weitere Kupplung 132 wird in der ersten Betriebsart durch die Steuerung 94 ausgekuppelt. Das Planetengetriebe stellt an der Ausgangswelle 70 eine variierbare Drehzahl bereit. Die Ausgangswelle 70 treibt über das Übersetzungsgetriebe 72, die eingekoppelte Schaltkupplung 74 und die Zahnräder 82 - 88 die Einzugswalzen 30 - 36 an. Durch Verstellung der Drehzahl des Hydromotors 60 kann somit die Fördergeschwindigkeit der Einzugswalzen 30 - 36 variiert werden. Sie definiert die Schnittlänge des von der Häckseltrommel 22 gehäckselten Ernteguts.

In der ersten Betriebsart ist der Metalldetektor 96 aktiviert. Falls er in den Einzugskanal eindringendes Metall nachweist, das zu einer Beschädigung der Häckseltrommel 22 oder anderer Elemente der Erntemaschine 10 führen könnte, wird über die Steuerung 94 die Elektrokupplung 44 abgeschaltet und gleichzeitig der Elektromagnet 98 aktiviert. Letzterer bewegt den Sperrnocken 90 in die Arretierstellung, so dass die Schaltkupplung 74 auskuppelt und kurz danach das erste Sperrrad 78 arretiert wird. Die Einzugswalzen 30 - 36 werden somit angehalten, bevor unerwünschtes Material die Häckseltrommel 22 erreicht. Die Steuerung kann auch das Schaltgetriebe 68 mittels des Hydraulikzylinders 104 in die Leerlaufstellung bringen, um die angetriebenen Elemente der Erntegutaufnahmevorrichtung anzuhalten. Nach Beseitigung des Fremdmaterials kann die erste Betriebsart wieder aufgenommen werden.

Die zweite Betriebsart dient zum Schleifen der Messer der Häckseltrommel 22. Auf eine entsprechende Eingabe des Bedieners in der Kabine 18 in die Eingabeeinrichtungen 134 veranlasst die Steuerung 94 ein Auskuppeln der Elektrokupplung 44 und ein Einkuppeln der weiteren Kupplung 132. Das Planetengetriebe des verstellbaren Getriebes 58 ist somit in sich blockiert. Die Kupplung 108 ist eingekuppelt. Der (gleichsinnig wie in der ersten Betriebsart angetriebene) Hydromotor 60 erzeugt eine Drehbewegung an der Ausgangswelle 70 und an der Welle 110, die gegensinnig mit der Drehbewegung in der ersten Betriebsart ist. Die Häckseltrommel 22 wird daher durch den Hydromotor 60 in eine Richtung gedreht, die der Drehrichtung in der ersten Betriebsart gegensinnig ist. Dann wird die Schleifeinrichtung 23 manuell oder selbsttätig durch entsprechende Aktoren aktiviert. Die Rückwärtsdrehung der Häckseltrommel 22 beim Schleifen ihrer Messer ermöglicht eine verbesserte Schleifqualität.

In der zweiten Betriebsart ist ein Antrieb der angetriebenen Elemente der Erntegutaufnahmevorrichtung 20 nicht erwünscht. Daher veranlasst in der zweiten Betriebsart die Steuerung 94 über die elektromagnetische Ventileinrichtung 106, dass der Hydraulikzylinder 104 das Schaltgetriebe 68 in die Leerlaufstellung verbringt. Das Antriebsmoment des Hydromotors 60 wird somit nicht zur Erntegutaufnahmevorrichtung 20 durchgeleitet.

Auch die Einzugswalzen 30 - 36 sind in der zweiten Betriebsart arretiert. Dazu aktiviert die Steuerung 94 über den Elektromagneten 98 den zweiten Sperrnocken 100, der ein Auskuppeln der Schaltkupplung 74 bewirkt. Der zweite Sperrnocken 100 greift unmittelbar danach in das zweite Sperrrad 80 ein, das bei der geltenden Drehrichtung wirksam ist, und arretiert es. Somit sind die Einzugswalzen 30 - 36 arretiert. In einer anderen Ausführungsform wäre auch denkbar, dass der zweite Elektromagnet 98 einen geänderten Sperrnocken aktiviert, der nur mit dem zweiten Sperrrad 80 zusammenwirkt, während der erste Elektromagnet 92 über den ersten Sperrnocken 90 die Schaltkupplung 74 ausschaltet.

Anzumerken ist, dass auch eine andere Betriebsart zum Schleifen der Messer der Häckseltrommel 22 möglich ist, bei der sich die Häckseltrommel 22 in der Richtung dreht, in die sie sich auch in der ersten Betriebsart dreht. Dann wird die Elektrokupplung 44 getrennt, das Schaltgetriebe 68 in die Leerlaufstellung verbracht, der Hydromotor 60 gegensinnig zu der oben genannten Drehrichtung angetrieben und der Elektromagnet 92 aktiviert, der über den ersten Sperrnocken 90 die Schaltkupplung 74 trennt und das erste Sperrrad 78 arretiert.

Die dritte Betriebsart, der Reversierbetrieb, ermöglicht ein Beseitigen von Verstopfungen in der Erntegutaufnahmevorrichtung 20 oder in der Erntemaschine 10. Auf eine entsprechende Eingabe in die Eingabeeinrichtungen 134 veranlasst die Steuerung 94, dass die Elektrokupplung 44 und die abschaltbare Kupplung 108 ausgekuppelt wird. Die weitere Kupplung 132 wird durch die Steuerung in einen eingekuppelten Zustand verbracht. Das Planetengetriebe des verstellbaren Getriebes 58 ist somit ebenfalls in sich blockiert. Der Hydromotor 60 erzeugt eine Drehbewegung an der Ausgangswelle 70 und an der Welle 110, die gegensinnig mit der Drehbewegung in der ersten Betriebsart ist. Einzig der Hydromotor 60 treibt dann über die Welle 110 die angetriebenen Elemente der Erntegutaufnahmevorrichtung 20 und über die Ausgangswelle 70 und die eingekoppelte Schaltkupplung 74 die Einzugswalzen 30 - 36 an. Die in der dritten Betriebsart abgeschaltete Kupplung 108 verhindert, dass der Hydromotor 60 ein Antriebsmoment zum Drehen der Häckseltrommel 22 und der Fördereinrichtung 24 aufbringen muss. Durch die umgekehrte Drehrichtung der Einzugswalzen 30 - 36 werden eventuelle Verstopfungen oder vom Metalldetektor 96 nachgewiesene Fremdmaterialien wieder ausgestoßen. Anzumerken ist, dass durch ein Antreiben des Hydromotors 60 in die umgekehrte Drehrichtung auch ein Betrieb möglich ist, in der die genannten Elemente langsam in einer Richtung angetrieben werden, in der sie das Erntegut einziehen. Eine derartige, weitere Betriebsart kann zum Beseitigen von Verstopfungen sinnvoll sein.

## Patentansprüche

1. Antriebssystem einer Gutbearbeitungseinrichtung (22) und einer Gutfördereinrichtung (30 - 36) einer Erntemaschine (10), das mindestens in einer ersten Betriebsart und in einer zweiten Betriebsart betreibbar ist, wobei in der ersten Betriebsart die Gutbearbeitungseinrichtung (22) durch eine erste Antriebseinrichtung angetrieben wird und zumindest ein Teil der Antriebsleistung der Gutfördereinrichtung (30 - 36) durch eine zweite Antriebseinrichtung bereitgestellt wird, so dass die Gutfördereinrichtung (30 - 36) der Gutbearbeitungseinrichtung (22) Erntegut zuführt, und die Gutbearbeitungseinrichtung (22) in der zweiten Betriebsart durch die zweite Antriebseinrichtung angetrieben wird, **gekennzeichnet durch** eine die Gutfördereinrichtung (30 - 36) in der zweiten Betriebsart arretierende Arretierungseinrichtung.

2. Antriebssystem nach Anspruch 1, **dadurch gekennzeichnet, dass** die Gutbearbeitungseinrichtung (22) in der zweiten Betriebsart mit anderer, vorzugsweise kleinerer Drehzahl und/oder anderer Drehrichtung als in der ersten Betriebsart angetrieben wird.

3. Antriebssystem nach Anspruch 1 oder 2, **dadurch gekennzeichnet, dass** die erste Antriebseinrichtung ein direkt oder indirekt mit der Gutbearbeitungseinrichtung (22) gekoppelter Verbrennungsmotor (38) ist.

4. Antriebssystem nach einem der Ansprüche 1 bis 3, **dadurch gekennzeichnet, dass** in der zweiten Betriebsart eine der Gutbearbeitungseinrichtung (22) zugeordnete Schleifeinrichtung (23) aktivierbar ist.

5. Antriebssystem nach einem der vorhergehenden Ansprüche, **dadurch gekennzeichnet, dass** die zweite Antriebseinrichtung einen Motor, insbesondere einen Hydromotor (60) umfasst.

6. Antriebssystem nach Anspruch 5, **dadurch gekennzeichnet, dass** die zweite Antriebseinrichtung ein mit dem Motor und in der ersten Betriebsart mit dem ersten Antrieb gekoppeltes Planetengetriebe umfasst.

7. Antriebssystem nach Anspruch 6, **dadurch gekennzeichnet, dass** in der zweiten Betriebsart das Moment des Motors durch das Planetengetriebe zur Gutbearbeitungseinrichtung (22) durchleitbar ist, die in der zweiten Betriebsart von der ersten Antriebseinrichtung getrennt ist.

8. Antriebssystem nach einem der vorhergehenden Ansprüche, **dadurch gekennzeichnet, dass** Mittel zum antriebsmäßigen Abtrennen der Gutfördereinrichtung (30 - 36) von der zweiten Antriebseinrichtung in der zweiten Betriebsart vorhanden sind.

9. Antriebssystem nach Anspruch 8, **dadurch gekennzeichnet, dass** die Arretierungseinrichtung betreibbar ist, zuerst die zweite Antriebseinrichtung von der Gutfördereinrichtung (30 - 36) abzutrennen und zeitlich danach die Gutfördereinrichtung (30 - 36) zu arretieren.

10. Antriebssystem nach Anspruch 8 oder 9, **dadurch gekennzeichnet, dass** eine Schaltkupplung (74) zum Verbinden und Abtrennen der Gutfördereinrichtung (30 - 36) mit bzw. von der zweiten Antriebseinrichtung vorgesehen ist, die durch ein erstes Element (90) und ein zweites Element (100) abschaltbar ist, wobei das erste Element (90) in der ersten Betriebsart durch einen Metalldetektor (96) aktivierbar ist und das zweite Element (100) in der zweiten Betriebsart aktiviert ist.

11. Antriebssystem nach Anspruch 10, **dadurch gekennzeichnet, dass** das erste Element (90) und/oder das zweite Element (100) auch zum Arretieren der Gutfördereinrichtung (30 - 36) eingerichtet ist bzw. sind.

12. Antriebssystem nach einem der vorhergehenden Ansprüche, **dadurch gekennzeichnet, dass** es durch ein Schaltgetriebe (68) mit den antreibbaren Elementen einer Erntegutaufnahmeeinrichtung (20) verbunden ist und dass das Schaltgetriebe (68) in der zweiten Betriebsart selbsttätig in eine Leerlaufstellung verbringbar ist.

## Claims

1. A drive system of a crop processing device (22) and a crop conveying device (30 - 36) of a harvesting machine (10), which is operable in at least a first mode of operation and a second mode of operation, wherein the crop processing device (22) is driven in the first mode of operation by a first drive device and at least part of the drive power of the crop conveying device (30 - 36) is provided by a second drive device, so that the crop conveying device (30 - 36) feeds crop to the crop processing device (22), and in the second mode of operation the crop processing device (22) is driven by the second drive device, **characterized by** an arresting device arresting the crop conveying device (30 - 36) in the second mode of operation.

2. A drive system according to claim 1, **characterized in that** the crop processing device (22) is driven in the second mode of operation at another, preferably smaller speed of rotation and/or in a different direction of rotation than in the first mode of operation.

3. A drive system according to claim 1 or 2, **characterized in that** the first drive device is an internal combustion engine (38) coupled directly or indirectly to the crop processing device (22).

4. A drive system according to any of claims 1 to 3, **characterized in that** a sharpening device (23) associated with the crop processing device (22) is activated in the second mode of operation.

5. A drive system according to any of the preceding claims, **characterized in that** the second drive means is a motor, especially a hydro-motor (60).

6. A drive system according to claim 5, **characterized in that** the second drive device comprises a planetary gear coupled to the motor and to the first drive unit in the first mode of operation.

7. A drive system according to claim 6, **characterized in that** the torque of the motor can be applied in the second mode of operation through the planetary gear to the crop processing device (22), which is isolated from the first drive device in the the second mode of operation.

8. A drive system according to any of the preceding claims, **characterized in that** means are provided for isolating the crop conveying device (30 - 36) from drive by the second drive device in the second mode of operation.

9. A drive system according to claim 8, **characterized in that** the arresting device is operable firstly to isolate the second drive device from the crop conveying device (30 - 36) and thereafter to arrest the crop conveying device (30 - 36).

10. A drive system according to claim 8 or 9, **characterized in that** a clutch (74) is provided for coupling and isolating the crop conveying device (30 - 36) to and from the second drive device and can be disengaged by a first element (90) and a second element (100), wherein the first element (90) can be activated in the first mode of operation by a metal detector (96) and the second element (100) is activated in the second mode of operation.

11. A drive system according to claim 10, **characterized in that** the first element and/or the second element (100) is/are also arranged to arrest the crop conveying device (30 - 36).

12. A drive system according to any of the preceding claims, **characterized in that** it is connected through a shift gear (68) to the driven elements of a crop receiving device (20) and **in that** the shift gear (68) can be automatically put in neutral in the second mode of operation.

## Revendications

1. Système d'entraînement d'un dispositif de traitement de la récolte (22) et d'un dispositif de transport de la récolte (30-36) dans une machine de récolte (10), lequel est apte à fonctionner au moins dans un premier mode de service et dans un deuxième mode de service, le dispositif de traitement de la récolte (22) étant actionné par un premier dispositif d'entraînement dans le premier mode de service et au moins une partie de la puissance d'entraînement du dispositif de transport de la récolte (30-36) étant fournie par un deuxième dispositif d'entraînement, de telle sorte que le dispositif de transport de la récolte (30-36) amène les produits récoltés dans le dispositif de traitement de la récolte (22), et le dispositif de traitement de la récolte (22) étant actionné par le deuxième dispositif d'entraînement dans le deuxième mode de service, **caractérisé par** un dispositif d'arrêt immobilisant le dispositif de transport de la récolte (30-36) dans le deuxième mode de service.

2. Système d'entraînement selon la revendication 1, **caractérisé en ce que** le dispositif de traitement de la récolte (22) est actionné dans le deuxième mode de service avec une autre vitesse de rotation, de préférence plus faible, et/ou dans un autre sens de rotation que dans le premier mode de service.

3. Système d'entraînement selon la revendication 1 ou 2, **caractérisé en ce que** le premier dispositif d'entraînement est un moteur à combustion interne (38) couplé directement ou indirectement avec le dispositif de traitement de la récolte (22).

4. Système d'entraînement selon l'une quelconque des revendications 1 à 3, **caractérisé en ce qu'**un dispositif d'affûtage (23), associé au dispositif de traitement de la récolte (22), peut être activé dans le deuxième mode de service.

5. Système d'entraînement selon l'une quelconque des revendications précédentes, **caractérisé en ce que** le deuxième dispositif d'entraînement comporte un moteur, en particulier un moteur hydraulique (60).

6. Système d'entraînement selon la revendication 5, **caractérisé en ce que** le deuxième dispositif d'entraînement comporte un engrenage planétaire couplé avec le moteur et, dans le premier mode de service, avec le premier dispositif d'entraînement.

7. Système d'entraînement selon la revendication 6, **caractérisé en ce que**, dans le deuxième mode de service, le couple du moteur peut être transmis par l'engrenage planétaire vers le dispositif de traitement de la récolte (22) qui, dans le deuxième mode de service, est séparé du premier dispositif d'entraînement.

8. Système d'entraînement selon l'une quelconque des revendications précédentes, **caractérisé en ce que** des moyens sont présents pour séparer sur le plan de l'entraînement le dispositif de transport de la récolte (30-36) du deuxième dispositif d'entraînement dans le deuxième mode de service.

9. Système d'entraînement selon la revendication 8, **caractérisé en ce que** le dispositif d'arrêt est apte à être actionné pour séparer d'abord le deuxième dispositif d'entraînement du dispositif de transport de la récolte (30-36) et, chronologiquement ensuite, pour immobiliser le dispositif de transport de la récolte (30-36).

10. Système d'entraînement selon la revendication 8 ou 9, **caractérisé en ce qu'**il est prévu un embrayage (74), destiné à relier le dispositif de transport de la récolte (30-36) au deuxième dispositif d'entraînement et à le séparer de celui-ci, lequel peut être déconnecté par un premier élément (90) et un deuxième élément (100), le premier élément (90) pouvant être activé par un détecteur de métaux (96) dans le premier mode de service et le deuxième élément (100) étant activé dans le deuxième mode de service.

11. Système d'entraînement selon la revendication 10, **caractérisé en ce que** le premier élément (90) et/ou le deuxième élément (100) est ou sont également conçu(s) pour immobiliser le dispositif de transport de la récolte (30-36).

12. Système d'entraînement selon l'une quelconque des revendications précédentes, **caractérisé en ce qu'**il est relié aux éléments actionnables d'un dispositif de ramassage de récolte (20) par l'intermédiaire d'une boîte de vitesses (68) et **en ce que** la boîte de vitesses (68) peut être amenée automatiquement au point mort dans le deuxième mode de service.
